# DEMANDE DE BREVET EUROPEEN

(11) **EP 4 738 490 A1**
(43) Date de publication de la demande: **06.05.2026**
(21) Numéro de dépôt: 25212613.1
(22) Date de dépôt: 31.10.2025
(51) Int. Cl.: H01M 8/04223, H01M 8/04029

(54) **DISPOSITIF ANTI-CONDENSATION D'UNE CANALISATION D'UN SYSTÈME DE PILE À COMBUSTIBLE**

(30) Priorité: 31.10.2024 FR 2411917
(71) Demandeur: PLASTIC OMNIUM NEW ENERGIES FRANCE, 69007 Lyon (FR)
(72) Inventeur: SCHAEFFER, Benjamin, 1200 WOLUWE-SAINT-LAMBERT (BE); SCHMID, Daniel, WOLUWE-SAINT-LAMBERT (BE)
(74) Mandataire: LLR

(57) **Abrégé**

L'invention concerne un système de pile à combustible (1) comprenant un dispositif anti-condensation (3) d'une canalisation (4).

Selon l'invention, le système de pile à combustible est tel que le dispositif anti-condensation (3) comprend un dispositif de chauffage (5) constitué d'un liquide caloporteur circulant au sein d'une tubulure (6) enroulée autour de la canalisation (4), l'orifice d'entrée (60) du fluide caloporteur dans la tubulure (6) étant disjoint de l'orifice d'entrée (40) ou de l'orifice de sortie (41) de la canalisation (4).

## Description

L'invention concerne un système de pile à combustible comprenant un dispositif anti-condensation d'une canalisation, plus particulièrement d'une canalisation d'un module de pile à combustible. Plus spécifiquement, l'invention concerne un dispositif anti-condensation qui peut empêcher une diminution de la durabilité d'un système de pile à combustible.

L'invention peut être utilisée notamment dans un véhicule à pile à combustible.

Depuis toujours la condensation de vapeur d'eau au sein d'une canalisation d'un système de pile à combustible expose ce dernier à des risques mécaniques liés à la présence d'eau susceptible de geler à basse température au sein de la canalisation mais également à une diminution du rendement du système de pile à combustible lié à une mauvaise alimentation en air ou en oxygène ou en hydrogène du fait de la présence d'eau liquide.

Le document KR20130073041A décrit un dispositif permettant de limiter la condensation au sein d'une canalisation d'un système de pile à combustible. Ce dispositif comporte un système de canalisations coaxiales concentriques, la canalisation ou tubulure intérieure au sein de laquelle une condensation de vapeur d'eau peut se produire étant entourée par une tubulure extérieure. Ainsi, un liquide caloporteur circule au sein de la tubulure extérieure, cette circulation de liquide caloporteur permet de réduire le risque d'une condensation de la vapeur d'eau au sein de la canalisation ou tubulure intérieure.

Toutefois, la solution proposée offre peu de flexibilité au niveau de sa connexion aux éléments de la pile à combustible et en outre entraîne un risque de fuite d'un fluide d'une canalisation à l'autre.

L'invention a notamment pour objectif de pallier ces inconvénients de l'art antérieur.

Plus précisément, un objectif de l'invention, dans au moins un de ses modes de réalisation, est de fournir un système de pile à combustible comprenant un dispositif anti-condensation d'une canalisation, plus particulièrement d'une canalisation d'un module de pile à combustible du système de pile à combustible.

L'invention, dans au moins un de ses modes de réalisation, a encore pour objectif de fournir un véhicule à pile à combustible.

Conformément à un mode de réalisation particulier, l'invention concerne un système de pile à combustible comprenant un dispositif anti-condensation d'une canalisation.

Selon l'invention, un tel dispositif anti-condensation comprend un dispositif de chauffage constitué d'un liquide caloporteur circulant au sein d'une tubulure enroulée autour de la canalisation, l'orifice d'entrée du fluide caloporteur dans la tubulure étant disjoint de l'orifice d'entrée ou de l'orifice de sortie de la canalisation.

Le principe général de l'invention repose sur la présence d'un dispositif de chauffage constitué d'un liquide caloporteur circulant au sein d'une tubulure enroulée autour de la canalisation, l'orifice d'entrée du fluide caloporteur dans la tubulure étant disjoint de l'orifice d'entrée ou de l'orifice de sortie de la canalisation.

Ainsi, l'invention repose sur une approche tout à fait nouvelle et inventive de dispositif anti-condensation comprenant un système de chauffage constitué d'un liquide caloporteur circulant au sein d'une tubulure enroulée autour de la canalisation. Une telle disposition permet de disposer d'un système de chauffage dont l'agencement et la connexion aux éléments du système de pile à combustible sont aisés et dont l'intégration est facilitée. En outre, l'orifice d'entrée du fluide caloporteur dans la tubulure étant disjoint de l'orifice d'entrée ou de l'orifice de sortie de la canalisation, ceci permet de minimiser les risques de fuite d'un fluide de la canalisation à la tubulure et inversement.

Par l'expression « l'orifice d'entrée du fluide caloporteur dans la tubulure étant disjoint de l'orifice d'entrée ou de l'orifice de sortie de la canalisation», on entend désigner le fait que l'orifice d'entrée du fluide caloporteur dans la tubulure et l'orifice d'entrée ou l'orifice de sortie de la canalisation sont situés du même côté de la canalisation mais séparés et donc distants l'un de l'autre.

Avantageusement, le système de pile à combustible selon l'invention est tel que l'orifice de sortie du fluide caloporteur de la tubulure est disjoint de l'orifice d'entrée ou de l'orifice de sortie de la canalisation.

Ainsi, un système de chauffage dont l'orifice de sortie du fluide caloporteur de la tubulure est disjoint de l'orifice d'entrée ou de l'orifice de sortie de la canalisation offre une plus grande flexibilité d'intégration.

Par l'expression « l'orifice de sortie du fluide caloporteur de la tubulure est disjoint de l'orifice d'entrée ou de l'orifice de sortie de la canalisation », on entend désigner le fait que l'orifice de sortie du fluide caloporteur de la tubulure et l'orifice d'entrée ou de l'orifice de sortie de la canalisation sont situés du même côté de la canalisation mais séparés et donc distants l'un de l'autre.

Selon un mode de réalisation préféré du mode précédent, le système de pile à combustible selon l'invention est tel que l'orifice d'entrée du fluide caloporteur dans la tubulure est disjoint de l'orifice d'entrée de la canalisation et que l'orifice de sortie du fluide caloporteur de la tubulure est disjoint de l'orifice de sortie de la canalisation.

Ainsi, un système de chauffage dont l'orifice d'entrée du fluide caloporteur dans la tubulure est disjoint de l'orifice d'entrée de la canalisation et que l'orifice de sortie du fluide caloporteur de la tubulure est disjoint de l'orifice de sortie de la canalisation permet une intégration plus aisée, le fluide caloporteur et les fluides présents dans la canalisation s'écoulant dans le même sens.

Selon un mode de réalisation alternatif du mode précédent, le système de pile à combustible selon l'invention est tel que l'orifice d'entrée du fluide caloporteur dans la tubulure est disjoint de l'orifice de sortie de la canalisation et tel que l'orifice de sortie du fluide caloporteur de la tubulure est disjoint de l'orifice d'entrée de la canalisation.

Ainsi, un système de chauffage dont l'orifice d'entrée du fluide caloporteur dans la tubulure est disjoint de l'orifice de sortie de la canalisation et dont l'orifice de sortie du fluide caloporteur de la tubulure est disjoint de l'orifice d'entrée de la canalisation permet un meilleur chauffage de la canalisation.

Selon un mode de réalisation préféré, le système de pile à combustible selon l'invention est tel que la canalisation et la tubulure sont enrobées d'une matrice polymérique.

Ainsi un système de chauffage dont la canalisation et la tubulure sont enrobées d'une matrice polymérique permet d'obtenir une bonne conduction thermique entre la canalisation et la tubulure mais également une meilleure homogénéisation du chauffage ce qui permet d'éviter tout risque de point froid. La matrice polymérique est de préférence réalisée en polyuréthane. Alternativement, elle pourrait être réalisée en un élastomère fluorocarboné.

Selon un mode de réalisation préféré, le système de pile à combustible selon l'invention est tel que la tubulure et la canalisation sont à base d'un polymère sélectionné parmi le groupe consistant en du silicone et en un élastomère fluorocarboné.

Ainsi, une tubulure et une canalisation à base d'un polymère sélectionné parmi le groupe consistant en du silicone et en un élastomère fluorocarboné permet de bénéficier d'une structure canalisation-tubulure flexible permettant un montage aisé au sein du système de pile à combustible. En effet, le silicone et l'élastomère fluorocarboné présentent l'avantage d'être flexibles. Par ailleurs, on comprend que la canalisation et la tubulure sont fabriquées à base d'un même polymère. On peut ainsi aisément fusionner le polymère de la tubulure et le polymère de la canalisation, par exemple par traitement thermique. L'intérieur de la tubulure est ainsi plus proche de l'intérieur de la canalisation et la surface de contact entre la tubulure et la canalisation est augmentée. On obtient ainsi une grande proximité entre le liquide caloporteur et le fluide à réchauffer dans la tubulure. On améliore ainsi l'échange thermique entre les deux fluides. L'expression « à base d'un polymère » signifie que la tubulure et la canalisation sont fabriquées dans un même matériau qui est ce polymère, ou bien un matériau composite comprenant ce polymère, par exemple ledit polymère chargé en fibres.

Selon un mode de réalisation préféré, le système de pile à combustible selon l'invention est tel qu'un moyen de chauffage du liquide caloporteur est un module de pile à combustible.

Ainsi, lorsque le moyen de chauffage du liquide caloporteur est un module de pile à combustible, cela permet d'utiliser la chaleur générée par la pile pour chauffer le liquide caloporteur et ainsi disposer d'un système de chauffage dit passif ne nécessitant pas de source de chaleur additionnelle.

Selon un mode de réalisation préféré du mode précédent, le système de pile à combustible selon l'invention est tel que la canalisation est une canalisation du module de pile à combustible, préférentiellement une canalisation d'une boucle de recirculation du module de pile à combustible, plus préférentiellement une canalisation d'une boucle de recirculation anodique du module de pile à combustible.

Ainsi, un système de chauffage d'une canalisation du module de pile à combustible, particulièrement d'une boucle de recirculation du module de pile à combustible permet d'éviter la formation de goutte d'eau au sein de la canalisation qui entraînerait alors une perte de rendement du module de pile à combustible. Ceci s'applique plus particulièrement au niveau de la boucle de recirculation anodique, celle-ci permet d'assurer une recirculation de l'hydrogène qui est cruciale pour préserver l'efficacité du système de pile à combustible. En effet, l'hydrogène qui n'a pas été totalement consommé est réinjecté dans la pile permettant ainsi d'en améliorer les performances globales. La présence de gouttes d'eau induisant ipso facto une chute du rendement de la pile.

Selon un mode de réalisation préféré, le système de pile à combustible selon l'invention est tel que le liquide caloporteur est à base d'éthylène glycol. Préférentiellement, la conductivité du liquide caloporteur est inférieure ou égale à 2 µS/cm à 25 °C

Ainsi, un liquide caloporteur à base d'éthylène glycol permet d'éviter tout gel de ce dernier ou du mélange de ce dernier avec de l'eau déminéralisée aux températures de service habituellement rencontrées. Un liquide caloporteur de faible conductivité permet d'éviter l'apparition de court-circuit au sein du système de pile à combustible.

Selon un mode de réalisation préféré, le système de pile à combustible selon l'invention est tel que le rapport entre la longueur de la tubulure (Lt) et la longueur de la canalisation (L_{c}) est tel que Lₜ/L_{c} ≥ 1.5, préférentiellement Lₜ/L_{c} ≥ 2, plus préférentiellement Lₜ/L_{c} ≥ 3.

Ainsi, un système de chauffage dont le rapport entre la longueur de la tubulure (Lₜ) et la longueur de la canalisation (L_{c}) est supérieur ou égal à 1.5, préférentiellement supérieur ou égal à 2, plus préférentiellement supérieur ou égal à 3 permet de disposer d'une structure canalisation-tubulure qui soit à la fois flexible et assure un bon chauffage.

Selon un mode de réalisation alternatif ou complémentaire du mode précédent, le système de pile à combustible selon l'invention est tel que le rapport entre le pas de l'enroulement de la tubulure (P) et le diamètre intérieur de la canalisation (D) est compris dans la gamme de valeurs comprises entre 1/3 et 2. En d'autres termes , on a que 1/3 ≤ P/D ≤ 2.

Ainsi, un système de pile à combustible tel que le rapport entre le pas de l'enroulement de la tubulure (P) et le diamètre intérieur de la canalisation (D) est compris dans la gamme de valeurs comprises entre 1/3 et 2 permet d'avoir une structure canalisation-tubulure flexible.

Par l'expression « le pas de l'enroulement de la tubulure », on entend désigner la distance relative parcourue en translation par la tubulure par rapport à la canalisation lors d'un tour complet autour de la canalisation.

De façon avantageuse, dans le système de pile à combustible, le polymère à base duquel la canalisation est fabriquée a été fusionné avec le polymère à base duquel la tubulure est fabriquée.

Selon un mode de réalisation, la canalisation comprend une couche intérieure et au moins une couche extérieure de renfort, et la tubulure comprend une couche interne et au moins une couche externe de renfort, par exemple, la tubulure comprend trois couches de renfort.

De façon avantageuse, le système de pile à combustible comprend en outre une couche de remplissage, disposée entre la tubulure et la canalisation. Cette couche de remplissage permet une meilleure fixation entre la tubulure et la canalisation, ainsi qu'une meilleure conduction thermique. Avantageusement, la couche de remplissage est à base du même polymère que la tubulure et la canalisation.

Un objet de l'invention est un véhicule à pile à combustible comprenant un système de pile à combustible selon l'invention.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
la figure 1 présente un synoptique d'un système de pile à combustible selon l'invention
la figure 2 illustre les entrées et sorties au sein du module de pile à combustible du système de pile à combustible présenté à la figure 1
la figure 3 illustre une canalisation du dispositif de chauffage du système de pile à combustible selon l'invention
la figure 4 présente une coupe longitudinale de la canalisation décrite à la figure 3
la figure 5 illustre la coupe longitudinale présentée à la figure 4 sur laquelle ont été représenté le pas d'enroulement de la tubulure (P) et le diamètre intérieur de la canalisation
la figure 6 est une vue de détail de la figure 5
la figure 7 est une vue schématique d'une étape d'un exemple de méthode de fabrication d'un système de pile à combustible selon un mode de réalisation de l'invention.

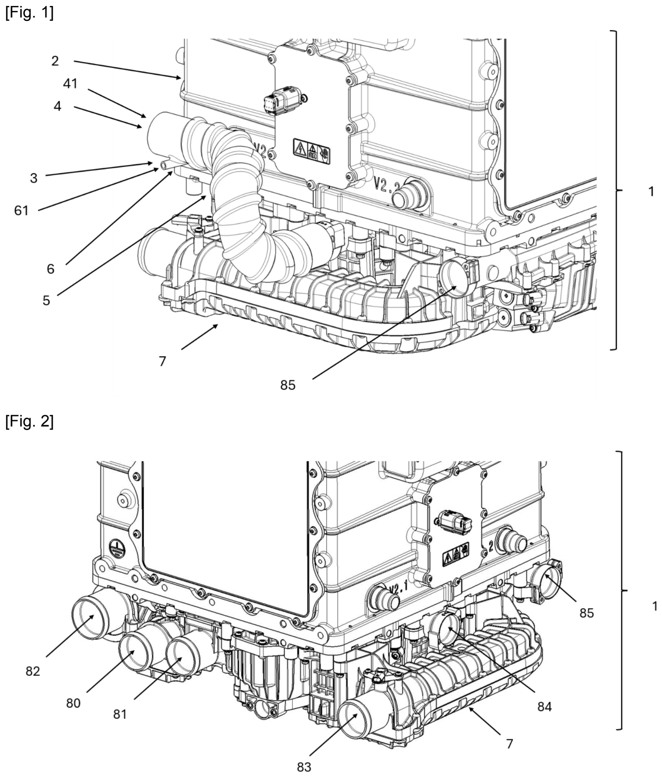

On présente, en relation avec la figure 1, un mode de réalisation d'un système de pile à combustible selon l'invention. Le système de pile à combustible 1 comprend un dispositif anti-condensation 3 d'une canalisation 4 d'un module de pile à combustible 2. Le dispositif anti-condensation 3 comprend un dispositif de chauffage 5 constitué d'un liquide caloporteur circulant au sein d'une tubulure 6 enroulée autour de la canalisation 4 du module de pile à combustible 2, l'orifice de sortie 61 du fluide caloporteur de la tubulure 6 étant disjoint de l'orifice d'entrée 41 de la canalisation 4 du module de pile à combustible 2. La canalisation 4 du module de pile à combustible étant une canalisation d'une boucle de recirculation anodique du module de pile à combustible. Le module de pile à combustible 2 comprend également une canalisation 7 de sortie de la partie cathodique du module 2. La tubulure 6 et la canalisation 4 sont à base d'un même polymère. Dans le mode de réalisation décrit, le polymère est sélectionné parmi le groupe consistant en du silicone et en un élastomère fluorocarboné, et les polymères de la tubulure et de la canalisation ont été fusionnés. Le point de sortie des fluides 85 de la partie anodique est également représenté.

La figure 2 présente le système de pile à combustible 1 de la figure 1 sous un autre angle. La figure 2 décrit les endroits de connexion de la tubulure 6 et de la canalisation 4 du module de pile à combustible 2. Les points d'entrée 84 et de sortie 85 des fluides de la partie anodique du module 2, les points d'entrée 82 et de sortie des fluides de la partie cathodique du module 2 sont également représentés. Le point de sortie des fluides 83 de la partie cathodique est matérialisé par l'ouverture de la canalisation 7.

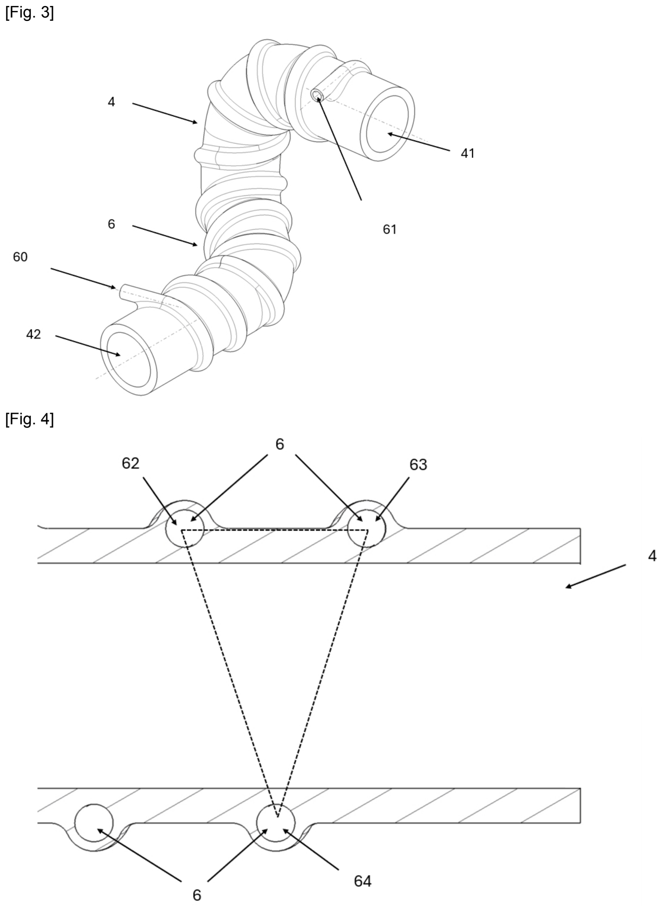

La figure 3 présente une canalisation 4 du module de pile à combustible des figures 1 et 2. La canalisation 4 est une canalisation d'une boucle de recirculation anodique. On observe que l'orifice de sortie 61 du fluide caloporteur de la tubulure 6 est disjoint de l'orifice d'entrée 41 des fluides de la partie anodique. De même, l'orifice d'entrée 60 du fluide caloporteur est disjoint de l'orifice de sortie 42 des fluides de la partie anodique. La canalisation 4 et la tubulure 6 sont à base d'un polymère sélectionné parmi le groupe consistant en du silicone et en un élastomère fluorocarboné, ces matériaux permettant d'obtenir un ensemble canalisation-tubulure suffisamment flexible. Le rapport entre la longueur de la tubulure (Lt) 6 et la longueur de la canalisation (L_{c}) 4 est tel que Lₜ/L_{c} ≥ 1.5, préférentiellement Lₜ/L_{c} ≥ 2, plus préférentiellement Lₜ/L_{c} ≥ 3, un tel rapport permet d'obtenir un bon chauffage de la canalisation 4 et ainsi d'éviter une condensation de la vapeur d'eau au sein de cette dernière.

La figure 4 illustre une coupe longitudinale de la canalisation 4 et de la tubulure 6. Cette figure permet d'observer l'agencement entre la tubulure 6 et la canalisation 4. Sur cette figure, on voit qu'il n'y a pas de délimitation entre le matériau de la canalisation 4 et le matériau de la tubulure 6. En effet, la canalisation 4 et la tubulure 6 sont à base d'un même polymère et le polymère de la canalisation et le polymère de la tubulure ont été fusionnés. L'enroulement de la tubulure 6 autour de la canalisation 4 est tel que lorsque l'on relie de manière abstraite le centre de deux sections adjacentes 62, 63 de la tubulure 6 avec le centre de la section opposée 64 de la tubulure 6 compris entre ces deux sections adjacentes 62, 63, la forme obtenue est un triangle isocèle comme indiqué par la forme en pointillé dans la figure 4.

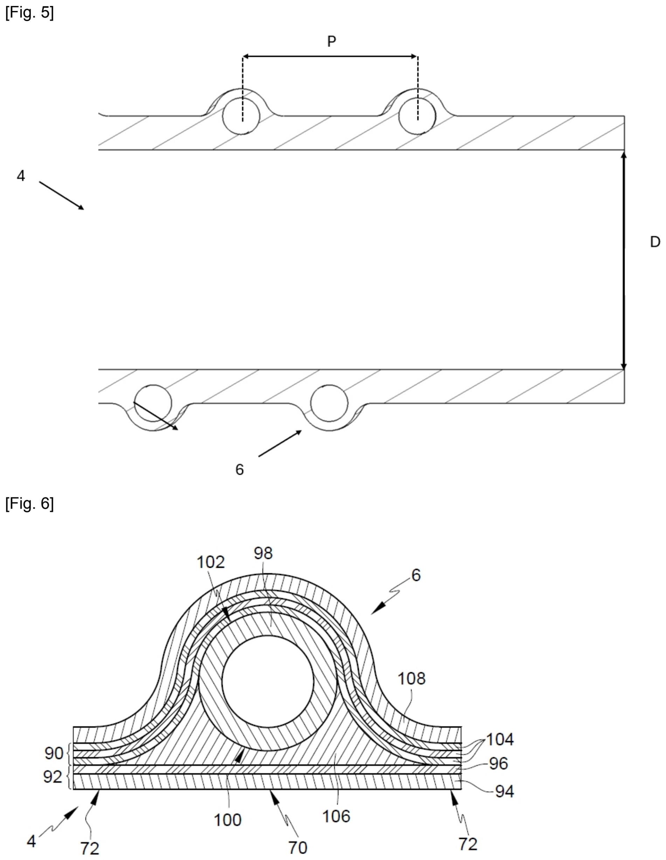

La figure 5 illustre la coupe longitudinale présentée à la figure 4. Cette figure permet d'observer l'agencement entre la tubulure 6 et la canalisation 4. L'enroulement de la tubulure 6 autour de la canalisation 4 est tel que le rapport entre le pas de l'enroulement de la tubulure (P) et le diamètre intérieur de la canalisation (D) est compris dans la gamme de valeurs comprises entre 1/3 et 2.

La figure 6 est une vue d'un détail de la figure 5, illustrant un mode particulier de réalisation de l'invention. Sur cette coupe longitudinale de la canalisation 4, i.e. selon l'axe longitudinal de la canalisation 4, montrant en coupe transversale, la tubulure 6 enroulée autour de la canalisation 4, on a désigné par la référence 70, une partie de la canalisation 4 située en regard de la tubulure 6, dite « partie en regard ». La partie en regard 70 comprend également des régions avoisinantes de la canalisation 4. A l'inverse, les parties de la canalisation 4 plus distantes de la tubulure 6, dites « parties distantes », sont désignées par la référence 72. Cette figure détaille en particulier que le volume intérieur de la tubulure 6 est délimité par une paroi 90 et que le volume intérieur de la canalisation 4 est délimité par une paroi 92.

La paroi 92 de la canalisation 4 est une paroi multi-couche comprenant une couche intérieure 94, destinée à être au contact du fluide circulant dans la canalisation 4, et une couche extérieure 96.

La paroi 90 de la tubulure 6 est également une paroi multi-couche. Le volume intérieur de la tubulure 6 est délimité par une couche interne 98 de la paroi 90. On distingue une portion 100 de la couche interne 98, localisée à proximité de la canalisation 4, dite « portion proche » et une portion 102 opposée, dite « portion opposée », plus éloignée de la canalisation 4. Des couches externes 104 de la paroi 90 sont disposées directement au contact de la portion opposée 102 de la couche interne 98. Ces couches externes 104 se prolongent le long de la canalisation 4 de manière à être au contact direct de la couche extérieure 96 de la paroi 92 de la canalisation 4, au niveau des parties distantes 72 de la canalisation 4. Dans l'exemple représenté, ces couches externes 104 sont au nombre de trois.

Sur la figure 6, on distingue également une couche de remplissage 106, disposée au contact de la portion proche 100 de la couche interne 98 de la tubulure 6, et au contact direct de la couche extérieure 96 de la paroi 92 de la canalisation 4, au niveau de la partie en regard 70 de la canalisation 4. Cette couche de remplissage 106 est réalisée dans un matériau permettant une meilleure fixation entre la couche interne 98 de la tubulure 6 et la couche extérieure 96 de la paroi 92 de la canalisation 4, ainsi qu'une meilleure conduction thermique.

Sur la figure 6, on distingue également une matrice polymérique 108, dans laquelle la canalisation 4 et la tubulure 6 sont enrobées.

La tubulure 6 et la canalisation 4 sont à base d'un même polymère. En effet, la couche intérieure 94 de la canalisation 4 et la couche interne 98 de la tubulure 6 sont réalisées dans un même polymère. Ce polymère est de façon avantageuse du silicone ou un élastomère fluorocarboné. La couche extérieure 96 de la paroi 92 de la canalisation 4 et les couches externes 104 de la paroi 90 de la tubulure 6 sont réalisées à base du même polymère que les couches 94 et 98, mais dans ces couches 96 et 104, ledit polymère est chargé en fibres. Grâce à cela, dans le système de pile à combustible représenté, les polymères de la tubulure 6 et de la canalisation 4 ont été fusionnés. Les couches extérieures 96 et externes 104 chargées en fibres sont des couches de renfort.

La couche de remplissage 106 est avantageusement réalisée à base du même polymère que la couche interne 98 et les couches externes 104 de la paroi 90 de la tubulure 6, et que la couche intérieure 94 et la couche extérieure 96 de la paroi 92 de la canalisation 4. Ainsi, le polymère de la couche de remplissage 106 peut également être fusionné avec les polymères de la tubulure 6 et de la canalisation 4.

La matrice polymérique 108 est de préférence réalisée en polyuréthane. Alternativement, elle pourrait être réalisée en un élastomère fluorocarboné.

Un exemple de méthode de fabrication du système de pile à combustible représenté sur la figure 6 comprend les étapes suivantes.

Dans une première étape, non représentée sur les figures, on fabrique la couche interne 98 de la tubulure 6. Pour ce faire, on utilise un moyen de mise en forme, préférentiellement un tube par exemple métallique, que l'on imprègne du polymère de la couche interne 98 (silicone ou élastomère fluorocarboné). Le moyen de mise en forme présente une forme enroulée et donnera cette forme à la couche interne 98. Une fois la couche interne 98 obtenue, on enlève le moyen de mise en forme.

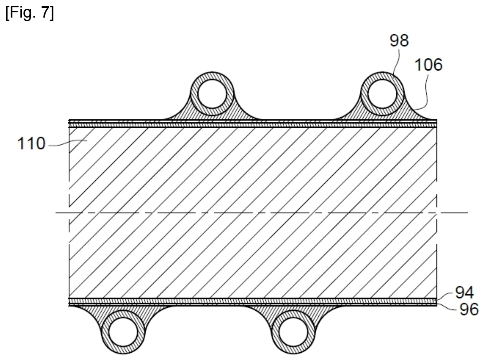

Dans une deuxième étape, également non représentée, on fabrique selon le même principe la couche intérieure 94 de la canalisation 4, sur la base d'un autre moyen de mise en forme tel qu'un tube par exemple métallique 110, de forme adaptée, et visible sur la figure 7. Ainsi, le moyen de mise en forme 110 est imprégné du polymère de la couche intérieure 94. Ce moyen de mise en forme 110 est cependant maintenu en place jusqu'à la dernière étape de fabrication du système de pile à combustible, comme cela sera décrit ci-après.

Dans une troisième étape, également non représentée, on dépose sur la couche intérieure 94 de la canalisation 4, le polymère chargé en fibre de la couche extérieure 96. On obtient ainsi une structure en deux couches qui formera la canalisation 4.

Dans une quatrième étape, on enroule autour de la canalisation 4 la couche interne 98 de la tubulure 6.

Dans une cinquième étape, représentée sur la figure 7, on ajoute à la structure comprenant déjà les deux couches 94, 96 de la canalisation 4 et la couche interne 98 de la tubulure 6, le polymère de la couche de remplissage 106, qui se dépose entre la couche interne 98 de la tubulure 6 et la couche extérieure 96 de la paroi 92 de la canalisation 4.

Dans une sixième étape, non représentée, on dépose sur la couche interne 98 de la tubulure 6, sur la couche de remplissage 106 et sur la couche extérieure 96 de la canalisation le polymère chargé en fibre d'une première couche externe 104 de la tubulure 6. Ainsi, cette couche externe 104 de la tubulure 6 enveloppe toute la structure préexistante.

Dans une septième étape, également non représentée, on dépose sur la première couche externe 104 de la tubulure 6 le polymère chargé en fibre d'une deuxième couche externe 104 de la tubulure 6, laquelle vient envelopper la première couche externe 104 de la tubulure 6.

Dans une huitième étape, également non représentée, on dépose sur la deuxième couche externe 104 de la tubulure 6 le polymère chargé en fibre d'une troisième couche externe 104 de la tubulure 6, laquelle vient envelopper la deuxième couche externe 104 de la tubulure 6.

Dans une neuvième étape, également non représentée, on enrobe la structure comprenant les couches de la canalisation 4 et de la tubulure 6 avec le polymère de la matrice polymérique 108.

Enfin, lors d'une dixième étape, on enlève le moyen de mise forme 110 présent sous la couche intérieure 94 de la canalisation 4.

Par ailleurs, les matériaux des différentes couches de la tubulure et de la canalisation sont fusionnés par traitement thermique entre les étapes 5 et 6, et optionnellement entre deux étapes successives suivant l'étape 6..

## Revendications

1. Système de pile à combustible (1) comprenant un dispositif anti-condensation (3) d'une canalisation (4), le dispositif anti-condensation (3) comprenant un dispositif de chauffage (5) constitué d'un liquide caloporteur circulant au sein d'une tubulure (6) enroulée autour de la canalisation (4), l'orifice d'entrée (60) du fluide caloporteur dans la tubulure (6) étant disjoint de l'orifice d'entrée (41) ou de l'orifice de sortie (42) de la canalisation (4),
tel que la tubulure (6) et la canalisation (4) sont à base d'un polymère sélectionné parmi le groupe consistant en du silicone et en un élastomère fluorocarboné.

2. Système de pile à combustible (1) selon la revendication 1, tel que l'orifice de sortie du fluide caloporteur de la tubulure (6) est disjoint de l'orifice d'entrée (41) ou de l'orifice de sortie de la canalisation (4).

3. Système de pile à combustible (1) selon la revendication précédente, tel que l'orifice d'entrée du fluide caloporteur dans la tubulure (6) est disjoint de l'orifice d'entrée (41) de la canalisation (4) et que l'orifice de sortie du fluide caloporteur (61) de la tubulure est disjoint de l'orifice de sortie de la canalisation.

4. Système de pile à combustible (1) selon la revendication 2, tel que l'orifice d'entrée du fluide caloporteur dans la tubulure (6) est disjoint de l'orifice de sortie de la canalisation et que l'orifice de sortie du fluide caloporteur de la tubulure est disjoint de l'orifice d'entrée (41) de la canalisation (4).

5. Système de pile à combustible (1) selon une quelconque des revendications précédentes, tel que la canalisation (4) du module de pile à combustible (2) et la tubulure (6) sont enrobées d'une matrice polymérique (108).

6. Système de pile à combustible selon une quelconque des revendications précédentes, tel qu'un moyen de chauffage du liquide caloporteur est un module de pile à combustible (2).

7. Système de pile à combustible (1) selon la revendication précédente, tel que la canalisation (4) est une canalisation du module de pile à combustible, préférentiellement d'une boucle de recirculation du module de pile à combustible (2), plus préférentiellement une canalisation d'une boucle de recirculation anodique du module de pile à combustible (2).

8. Système de pile à combustible selon une quelconque des revendications précédentes, tel que le liquide caloporteur est à base d'éthylène glycol.

9. Système de pile à combustible selon une quelconque des revendications précédentes, tel que le rapport entre la longueur de la tubulure (Lt) (6) et la longueur de la canalisation (L_{c}) (4) est tel que Lₜ/L_{c} ≥ 1.5, préférentiellement Lₜ/L_{c} ≥ 2, plus préférentiellement Lₜ/L_{c} ≥ 3.

10. Système de pile à combustible selon une quelconque des revendications précédentes, dans lequel le polymère à base duquel la canalisation (4) est fabriquée a été fusionné avec le polymère à base duquel la tubulure (6) est fabriquée.

11. Système de pile à combustible selon une quelconque des revendications précédentes, dans lequel la canalisation (4) comprend une couche intérieure (94) et au moins une couche extérieure (96) de renfort, et la tubulure (6) comprend une couche interne (98) et au moins une couche externe (104) de renfort.
